# EUROPEAN PATENT SPECIFICATION

(11) **EP 2 080 695 B1**
(45) Date of publication and mention of the grant of the patent: **06.10.2010**
(21) Application number: 09250068.5
(22) Date of filing: 12.01.2009
(51) Int. Cl.: B62J 6/00

(54) **Flasher and straddle-type vehicle**
Blinker und Grätschsitz-Fahrzeug
Clignotant et véhicule de type à selle et surface repose-pied

(30) Priority: 18.01.2008 JP 2008009844
(43) Date of publication of application: 22.07.2009
(73) Proprietor: Yamaha Hatsudoki Kabushiki Kaisha, Shizuoka-ken Shizuoka 438-8501 (JP)
(72) Inventor: Kageyama, Kouji, Shizuoka-ken, 438-8501 (JP)
(74) Representative: Harris, Ian Richard

(56) References cited:
- DE-A1- 19 943 886
- DE-U1-202004 019 278
- US-A1- 2005 185 415

## Description

### Technical Field

The present invention relates to a flasher (for example a direction indicator) to be installed at the rear portion of a straddle type vehicle.

### Background Art

A rear flasher to be installed at the rear portion of a straddle type vehicle is disclosed in, for example, Japanese Unexamined Patent Application No. 2005-235622. This publication discloses a flasher installed at the rear portion of a straddle type vehicle, which has a leg and protrudes from a vehicle body cover so as to provide a structure in which the surface on which the lens is mated with the cover is slanted relative to the horizontal direction of the vehicle body.

A flasher to be installed at the rear portion of a straddle type vehicle is a portion particularly prone to breakage in the event of the vehicle falling down. The present invention proposes a structure to allow the flasher to be resistant to breakage in the event of the vehicle falling down as well as to enhance the visibility (conspicuity) of the flasher.

According to the preamble of claim 1, US-2005/185415-A1 discloses a direction indicator for a motorcycle. The rear direction indicator has a lens which has a width D which is greater than its length F.

DE-19943886-A1 discloses an indicator for a motorcycle, wherein the indicator has a wide lens.

### Summary

A flasher according to the present invention provides a flasher to be installed at the rear portion of a straddle type vehicle. The flasher includes a lens and a cover to be mated with the lens. The cover is mounted on the vehicle body with a leg therebetween, the leg extending along a widthwise (breadthwise) direction of the straddle type vehicle. The surface on which the cover is mated with the lens is slanted relative to the direction in which the leg extends so as to allow the lens to be oriented toward the rear. The dimension of the lens along the widthwise direction is smaller than that along the lengthwise direction of the vehicle.

Mounting the flasher on the vehicle body with a leg therebetween, which extends along the widthwise direction of the straddle type vehicle and with the surface on which the cover is mated with the lens slanted relative to the direction in which the leg extends so as to allow the lens to be oriented toward the rear and with a smaller dimension along the widthwise direction than that along the lengthwise direction of the vehicle results in improved visibility of the flasher so that the flasher is more conspicuous as well as the flasher being resistant to breakage in the event of the vehicle falling down.

### Brief Description of the Drawings

Embodiments of the invention are described below, by way of example only, with reference to the drawings.
Fig. 1 is a right side view of the straddle type vehicle according to an embodiment of the present invention.
Fig. 2 is a rear view of the straddle type vehicle according to an embodiment of the present invention.
Fig. 3 is a perspective view showing the flasher of the straddle type vehicle according to an embodiment of the present invention.
Fig. 4 is a disassembled perspective view of the flasher according to an embodiment of the present invention.
Fig. 5 is a disassembled perspective view of the flasher according to an embodiment of the present invention.
Fig. 6 is a sectional view of the flasher according to an embodiment of the present invention.

### Detailed Description

Embodiments of the present invention relating are described below with reference to the drawings. In the drawings, the same numerals are used to designate a component or portion which performs the same functions. The present invention is not limited to the embodiment below. The terms "front", "rear", "left", "right", "upper", or "lower" are those as viewed from a rider when the rider is behind the wheel in the normal riding position. If necessary, the vehicle front and rear are indicated by Fr and Rr, respectively. The drawings are drawn so as to be viewed in such a manner that the numerals are oriented in the proper direction.

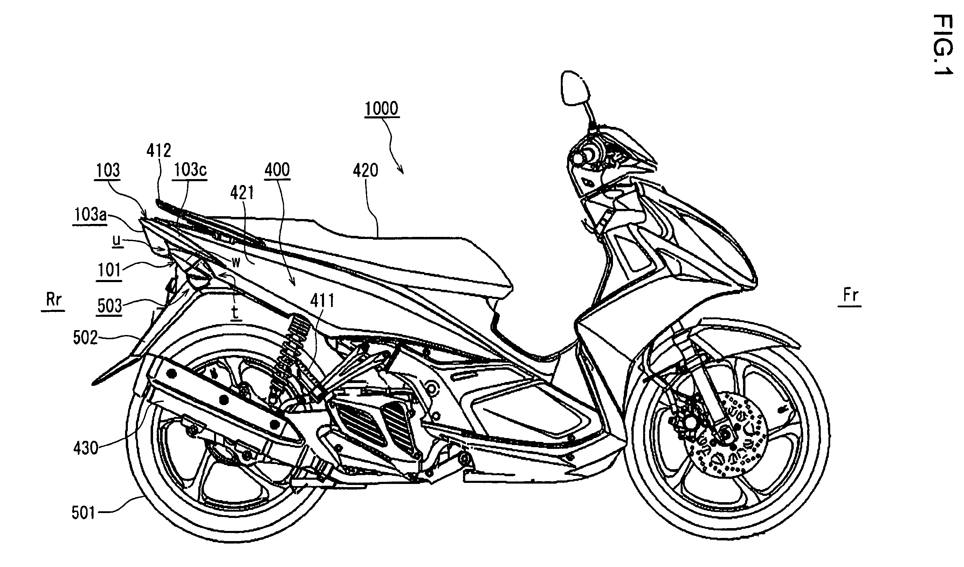

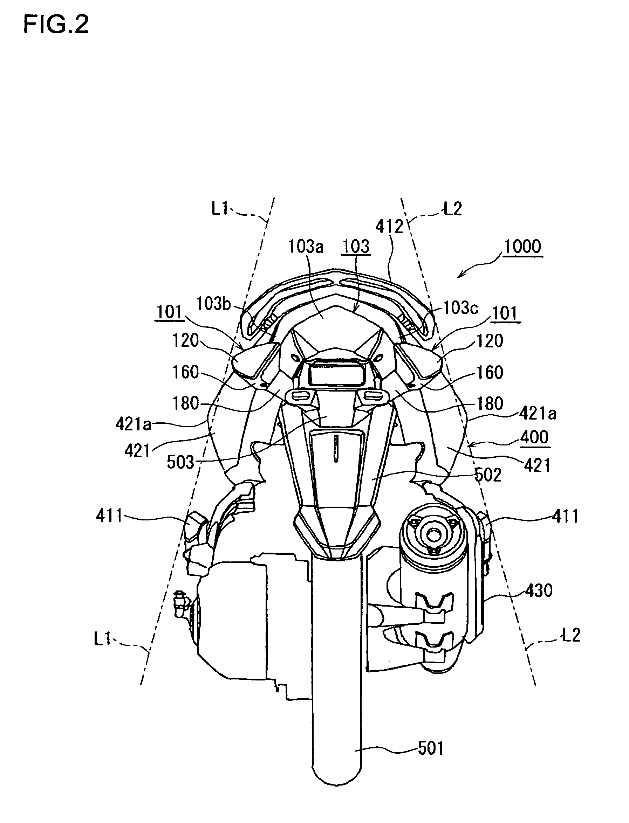

In this embodiment, as shown in Fig. 1, a straddle type vehicle 1000 is a scooter type motorcycle having a resin vehicle body cover 400 installed on the body frame (not shown) thereof. As shown in Fig. 2, the straddle type vehicle 1000 includes a tail lamp 103 and flasher 101 installed at the rear portion thereof, the rail lamp 103 mainly functioning as a brake lamp and the flasher 101 mainly functioning as a direction indicator lamp. Fig. 2 is a drawing of the straddle type vehicle 1000 as viewed from the rear thereof, where part of the vehicle is simplified for the sake of convenience, and, in particular, parts inside the vehicle body cover 400 are omitted. The external components on the vehicle body cover 400, the tail lamp 103, and the flasher 101 are substantially mounted on the body frame (not shown) with brackets inbetween, respectively. This prevents these external components from rattling due to air flow or vibration resulting from vehicle operations, thereby ensuring required mounting strength.

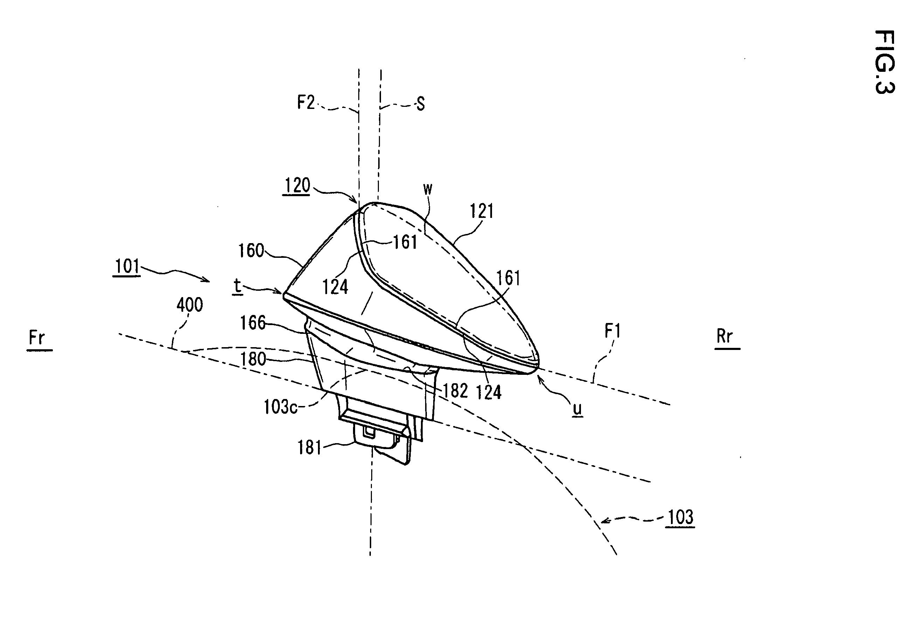

As shown in Fig. 2, the tail lamp 103 is installed on the vehicle body cover 400 at the rear portion of the vehicle. The flasher 101, provided separately from the flasher 103, is disposed on either side of the rear portion of the vehicle along the widthwise direction. In this embodiment, a mudguard component (rear fender) 502 is disposed behind a rear wheel 501. As shown in Figs. 2 and 3, the flasher 101 has a leg 180 and is mounted on a base end 503 of the mudguard component 502 with the legs 180 therebetween.

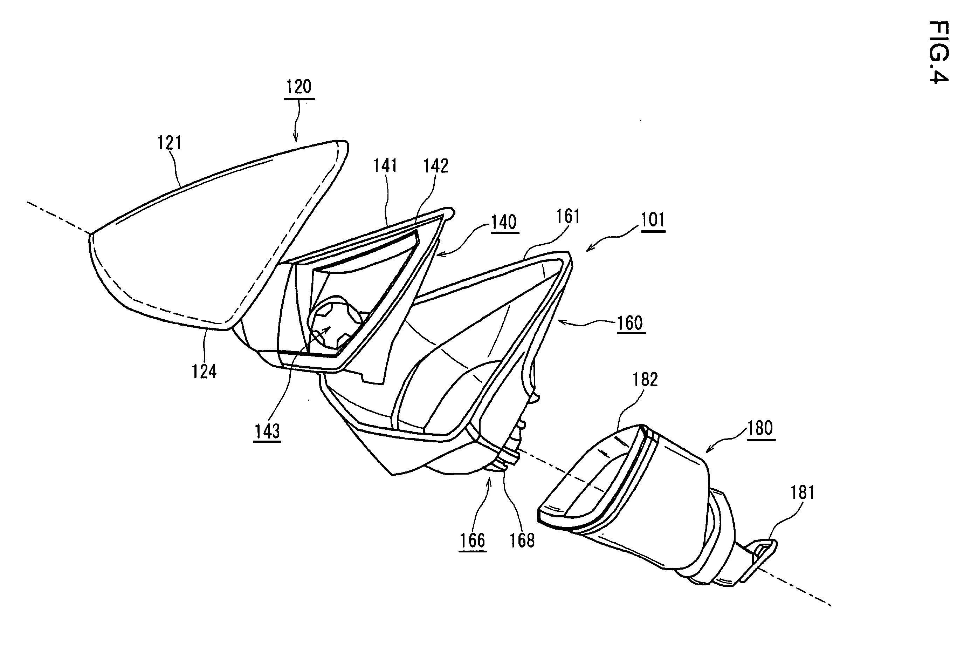

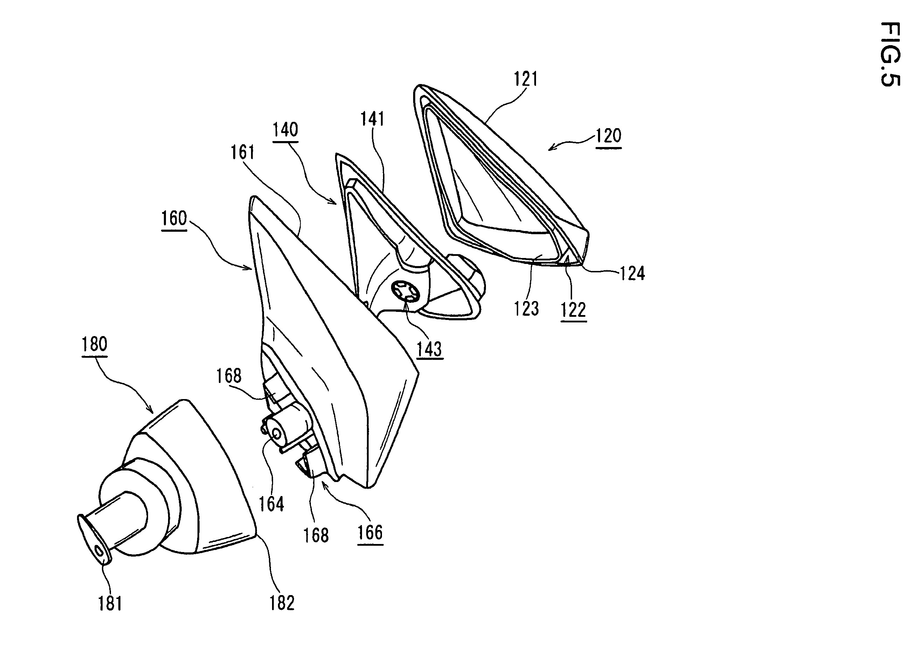

As shown in Figs. 4 and 5, the flasher 101 includes a lens 120, a housing 140, a cover 160, and a leg 180.

The lens 120 is molded with a transparent resin (methacryl (PMMA) for this embodiment) and has a transparent lens surface 121. The lens 120 is provided at the peripheral edge thereof with a mounting portion 124 for mounting a cover 160 and a mounting portion 123 for mounting a housing 140. The mounting portion 123 for mounting the housing 140 is provided inside of the mounting portion 124 for mounting the cover 160. The lens 120 includes an opaque area formed between the mounting portion 124 for mounting the cover 160 and the mounting portion 123 for mounting the housing 140.

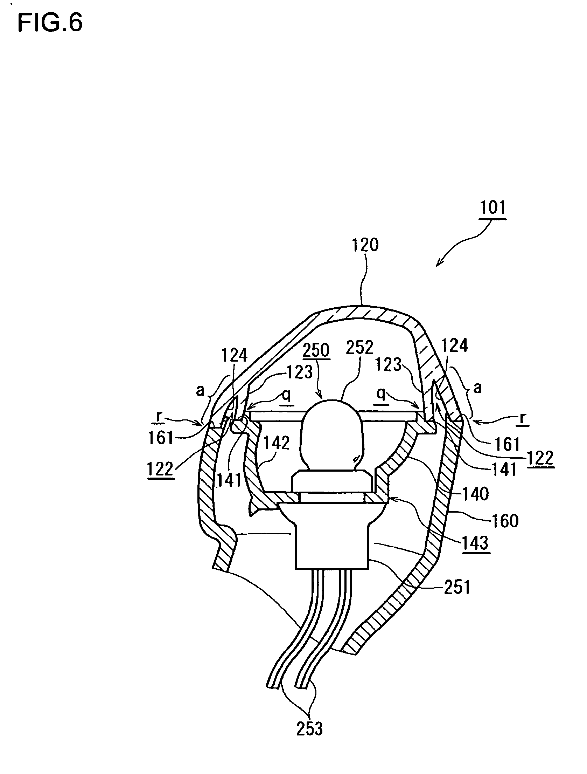

In this embodiment, as shown in Fig. 6, the lens 120 includes an outer wall 124 (mounting portion 124) formed at the peripheral edge thereof and an inner wall 123 (mounting portion 123) formed inside the outer wall 124. An area a, as the opaque area above, at the external portion of the outer wall 124 is coated with an opaque paint. In this embodiment, the external portion of the outer wall 124 is coated along the entirety of the peripheral edge of the lens 120 with a black paint.

The housing 140 includes a bulb 250 (see Fig. 6) provided therein as a light source. In this embodiment, as shown in Fig. 4, the housing 140 is a housing (casing) where the bulb 250 is disposed, and has a substantial recess formed on the side facing the lens. The housing 140 is molded with a resin (polycarbonate for this embodiment), and has a mirror finished surface 142 formed therein and facing the lens 120, the surface 142 constituting a reflector. The housing 140 doubles as a reflector. The mirror finish may be made by, for example, metal deposition or the like. The housing 140 includes a bulb placement portion 143 in which a bulb 250 is disposed. In this embodiment, as shown in Fig. 6, the bulb 250 is so disposed that its light emitting portion 252 is oriented toward the lens surface 121, while a socket 251 is secured to the bulb placement portion 143. In this embodiment, the outer edge 141 of the housing 140 is placed on the mounting portion 123 (inner wall 123) formed inside the peripheral edge of the lens 120. More specifically, in this embodiment, the inner wall 123 in the lens 120 and the outer edge 141 of the housing 140 are placed in such a manner that their edges are in contact with each other. Besides, the outer edge 141 of the housing 140 is secured to the mounting portion 123 in the lens 120 by adhesion in a watertight manner.

As shown in Fig. 4, the cover 160 is a component for covering the outside of the housing 140, and is placed on the outer wall 124 in the lens 120. As shown in Fig. 6, the outer edge 161 of the cover 160 is placed on the mounting portion 124 (outer wall 124) formed at the periphery of the lens 120. More specifically, in this embodiment, the outer wall 124 of the lens 120 and the outer edge 161 of the cover 160 are in contact with each other. Furthermore, in this embodiment, a contact portion q where the inner wall 123 in the lens 120 is in contact with the outer edge 141 of the housing 140 and a contact portion r where the outer wall 124 in the lens 120 is in contact with the outer edge 161 of the cover 160 are offset in relation to the direction in which they are in contact with each other.

As shown in Fig. 5, in this embodiment, the cover 160 is molded with a resin (polypropylene (PP) for this embodiment), and includes an opening 164 formed therein, through which an electrical wire 253 (see Fig. 6) from the bulb 250 is passed. The cover 160 is provided at the outside surface thereof with a mounting portion 166 around the opening 164, the mounting portion 166 being for mounting the leg 180. Furthermore, in this embodiment, the mounting portion 166 includes a turn stopper 168 formed therearound. In this embodiment, the turn stopper 168 includes a mating portion formed along a sharp curve in an ellipse with which the long axis intersects.

As shown in Figs. 4 and 5, the leg 180 is a component in a cylindrical form, and is secured at one end 181 thereof to the vehicle body cover 400 (see Fig. 2) and at the other end thereof to the mounting portion 166 in the cover 160 of the flasher 101. In this embodiment, the mounting portion 166 includes the turn stopper 168 formed therein. The cover 160 of the flasher 101 is placed on the other end 182 of the leg 180 so as to be engaged with the turn stopper 168. This allows the cover 160 to be mated with the leg 180. In this case, the leg 180 may be molded with an elastic material, for example, a rubber.

In this embodiment, the electrical wire 253 connected to the bulb in the flasher 101, whose illustration is omitted, is electrically connected with a battery (not shown) in the straddle type vehicle 1000 through the cover 160, the leg 180, and the vehicle body cover 400 from the bulb placement portion 143 in the housing 140.

The flasher 101 allows direct light emitted by the bulb and reflected light from the inside of the housing 140 to illuminate the outside of the lens 120 through the transparent lens surface 121 in the lens 120. The direction in which the light from the flasher 101 is emitted is adjusted by the housing or the like so as to be visible from a predetermined region outside the flasher 101.

As shown in Fig. 6, the flasher 101 includes the cover 160 placed on the peripheral edge of the lens 120, and the housing 140 placed on the peripheral edge of the lens 120 so as to be located at the inner side of the cover 160. The lens 120 includes an opaque area formed between the cover 160 and the housing 140. For this, even in the event of water entering the inside of the cover 160 around the peripheral edge of the lens 120, the water is not visible from the outside.

As shown in Fig. 3, the flasher 101 includes the surface on which the cover 160 is mated with the lens 120 slanted in relation to the direction s in which the leg 180 extends, while the lens 120 has a smaller dimension along the widthwise direction than that along the lengthwise direction of the straddle type vehicle 1000. This provides the flasher 101 with good visibility (in particular, a lefthand rear flasher providing visibility as viewed from the rear at the left side of the vehicle and a right-hand rear flasher providing visibility as viewed from the rear at the right side). In the event of the vehicle falling down, since the lens 120 has a smaller dimension along the widthwise direction than that along the lengthwise direction of the vehicle, an impact resulting from the vehicle falling down can be sustained along the length of the vehicle which is longer, thereby protecting the lens 120 or the cover 160 against breakage due to the impact. In this embodiment, the leg 180 acts as a cushion in the event of the vehicle falling down, protecting other components of the flasher 101 from breakage resulting from the vehicle falling down. In particular, in this embodiment, the leg 180 is in a cylindrical form, and is molded with a rubber which is more elastic and flexible than other components of the flasher 101. This ensures that other components are protected from breakage due to impact in the event of vehicle falling down. The flasher 101 acting as a cushion protects the vehicle body cover 400 from breakage or damage. Furthermore, in this embodiment, the lens 120, having a smaller dimension along the widthwise direction than that along the lengthwise direction, provides visibility as viewed from the side and the rear, while it limits the projection of the flasher 101 from the vehicle body to a small degree. The installation of the flasher 101 on the vehicle body with the leg 180 therebetween results in a more slender vehicle body cover design at the rear of the straddle type vehicle 1000. The flasher 101 ensures visibility as viewed from the side as well as the rear while it does not greatly project in the widthwise direction, enhancing the flexibility in designing the vehicle including the flasher 101.

The phrase "the direction s in which the leg 180 extends" refers to the direction in which the leg 180 extends from the vehicle body. Like this embodiment, if the leg 180 is made up of a hollow, cylindrical component, such a direction can be thought to be the axial direction of the hollow. Such a direction can be replaced by the widthwise direction of the vehicle (horizontal direction of the vehicle).

In this embodiment, the vehicle body surface (the surface of the base end 503 on the mudguard component 502 for this embodiment) on which the leg 180 of the flasher 101 is mounted is oriented toward the rear of the vehicle, as shown in Fig. 2. For this, the lens 120 of the flasher 101 can easily be directed toward the rear of the vehicle, thereby ensuring visibility of the flasher 101 as viewed from the rear of the vehicle.

In this embodiment, the flasher 101 is tapered toward its front end t and rear end u along the lengthwise direction, as shown in Fig. 3. The lens 120 has a large dimension along the lengthwise direction of the vehicle, resulting in the lens surface 121 having a larger dimension along the lengthwise direction. This provides a greater lens surface area visible from the side or the rear, leading to enhanced visibility of the flasher 101. Furthermore, although illustrations are omitted here, if the taper toward the front end t and the rear end u is not made along the lengthwise direction, a substantially quadrangular flasher, for example, has its front end t and rear end u largely projecting in the widthwise and vertical directions when viewed from the side of the flasher. In this embodiment, the flasher 101 is tapered toward its front end t and the rear end u along the lengthwise direction, as shown in Fig. 1. The front end t and the rear end u of the flasher 101 are prevented from largely projecting in the widthwise and vertical directions, while ensuring the visibility of the flasher 101. This allows the flasher 101 to be resistant to contact with the ground in the event of the falling down of the vehicle, thereby protecting the flasher 101 from breakage.

Furthermore, in this embodiment, the rear end u of the flasher 101 is more acute-angled than the front end t of the flasher 101. This allows the flasher 101 to be formed so as to extend a large distance rearward and also allows the lens surface 121 to be formed so as to extend a large distance rearward, resulting in increased lens surface area visible from the side and the rear, thereby enhancing the visibility of the flasher 101.

In this embodiment, the straddle type vehicle 1000 has a tail lamp 103 provided at the rear thereof. As shown in Figs. 1 and 2, the tail lamp 103 has a body portion 103a disposed at the rear of the vehicle, and side portions 103b and 103c extending forward from the body portion 103a along both sides in the widthwise direction. In this embodiment, as shown in Fig. 3, the lens 120 of the flasher 101 is disposed along the side portions 103b and 103c of the tail lamp 103. This allows the flasher 101 and the tail lamp 103 at the rear of the straddle type vehicle 1000 to be disposed in a compact manner. Also, this makes it appear that the tail lamp 103 and the flasher 101 are an integrated component.

In particular, in this embodiment, a ridge line w, connecting between the flasher front end t and rear end u along the lengthwise direction of the lens 120 of the flasher 101, extends along the side surface of the side portions 103b and 103c of the tail lamp 103, as shown in Figs. 1 and 3. This allows the flasher 101 and the tail lamp 103 at the rear of the straddle type vehicle 1000 to be disposed in a compact manner, as well as makes it appear the tail lamp 103 and the flasher 101 are an integrated component. When the vehicle is viewed from the top, the outline of the lens 120 of the flasher 101 along the widthwise direction of the vehicle may be formed along the side surface of the side portions 103b and 103c of the tail lamp 103. This arrangement also allows the flasher 101 and the tail lamp 103 at the rear of the straddle type vehicle 1000 to be disposed in a compact manner, as well as provides an integrated image of the tail lamp 103 and the flasher 101.

In this embodiment, the surface F1 on which the edge 161 of the cover 160 is mated with the edge 124 of the lens 120 extends along the side of the vehicle body cover 400, as shown in Fig. 3. As mentioned above, the surface F1 on which the edge 161 of the cover 160 is mated with the edge 124 of the lens 120 extends at one or more portions thereof along the side of the vehicle body cover 400, producing an integrated image of the flasher 101 and the vehicle body cover 400 as well as an aesthetically pleasing vehicle design.

In this embodiment, as shown in Fig. 3, the surface on which the edge 161 of the cover 160 is mated with the edge 124 of the lens 120 is made up of two surfaces F1 and F2, one at the rear of the flasher 101 and the other at the front, while the surface F1 at the front is more oriented toward the rear of the vehicle than the surface F2 at the rear. Therefore, in particular, the flasher 101 can readily be seen from the side and the rear, thereby ensuring visibility as viewed from a prescribed range at the side and rear of the vehicle as well as implementing a relatively compact lens 120. In this case, as shown in Fig. 3, the surface on which the edge 161 of the cover 160 is mated with the edge 124 of the lens 120 may be substantially divided into two surfaces F1 and F2, one at the rear and the other at the front of the flasher 101. The boundary may be smoothly continuous. The two surfaces F1 and F2 at the rear and the front of the flasher 101 need not be completely planar.

As shown in Fig. 3, in this embodiment, the surface on which the edge 161 of the cover 160 is mated with the edge 124 of the lens 120 is slanted in relation to the direction s in which the leg 180 extends from the vehicle body cover 400, and a more frontal portion of the straddle type vehicle 1000 includes the lens 120 located further outwardly in the widthwise direction with respect to the location of the lens at a more rearward portion of the straddle type vehicle, resulting in enhanced visibility as viewed from the rear and the side. In other words, the edge 161 of the cover 160 mated with the edge 124 of the lens 120 is slanted in relation to the direction s in which the leg 180 extends from the vehicle body cover 400 so that the part of the lens to be located towards the front of the vehicle extends further outwardly in the widthwise direction with respect to the part of the lens to be located towards the rear of the vehicle as illustrated in Figure 3, for example.

In this embodiment, the straddle type vehicle 1000 is provided with a tandem footrest 411 and a grab bar 412, as shown in Fig. 2. When viewed from the rear of the vehicle, the flasher 101 is disposed inward of lines L1 and L2, each of which connects between the ends of the tandem footrest 411 and the grab bar 412, the ends being the outermost ends along the widthwise direction of the vehicle. Therefore, in the event of vehicle falling down, the tandem footrest 411 and the grab bar 412 are more prone to contact with the ground than the flasher 101, thereby preventing the flasher 101 from contacting the ground. This arrangement protects the flasher from breakage due to impact associated with the vehicle falling down. The tandem footrest 411 is a component on which tandem riders rest their feet, and is disposed at either side of the straddle type vehicle 1000, as shown in Figs. 1 and 2. The grab bar 412, disposed at the rear of the vehicle, is a component that tandem riders grasp during vehicle operation.

In this embodiment, the straddle type vehicle 1000 includes side covers 421 disposed under a seat 420, and the flasher 101 is disposed inward of the outermost position 421a on the side cover 421 along the widthwise direction of the vehicle, as shown in Figs. 1 and 2. Therefore, in the event of the vehicle falling down, the side cover 421 is more prone to contact with the ground than the flasher 101, thereby preventing the flasher 101 from contacting the ground. This arrangement protects the flasher from breakage due to impact associated with the falling down.

In this embodiment, the straddle type vehicle 1000 includes a muffler 430 disposed along the side of the vehicle body cover 400, as shown in Fig. 2. The flasher 101 is disposed inward of the outermost end of the muffler 430 along the widthwise direction of the vehicle. Therefore, in the event of the vehicle falling down, the muffler 430 is more prone to contact with the ground than the flasher 101, thereby preventing the flasher 101 from contacting the ground. This arrangement protects the flasher from breakage due to impact associated with the vehicle falling down.

In this embodiment, the straddle type vehicle 1000 is provided at the rear portion of the vehicle with the tail lamp 103, as shown in Fig. 1. The lens 120 of the flasher 101 is disposed outward of the outermost end of the tail lamp 103 along the widthwise direction, as shown in Fig. 2. The straddle type vehicle 1000 allows the lens 120 of the flasher 101 to be disposed outward of the outermost end of the tail lamp 103 along the widthwise direction, thereby preventing light from the tail lamp 103 from interrupting light from the flasher 101 and securing the visibility of the flasher 101.

The flasher and the straddle type vehicle according to one embodiment of the present invention are described above. However, the flasher and the straddle type vehicle according to the present invention are not limited to the embodiment mentioned above. Various modifications are viable.

For example, the structure of the flasher is not limited to the structure described as an example in the above embodiment. For example, although a bulb is described as a light source, the light source is not limited to the bulb, but a component performing a light emitting function can be applied as well. For example, a light emitting element such as an LED can be used. Also, the specific structure of a lens, housing, cover, and leg is not limited to the embodiment mentioned above. For straddle type vehicles, the embodiment above is just one example of the flasher according to the present invention, and therefore can be modified in various manners.

### Reference Numerals

- 101:: flasher
- 103:: tail lamp
- 103a:: body of tail lamp
- 103b, 103c:: side of tail lamp
- 120:: lens of flasher
- 121:: lens surface
- 123:: mounting portion (inner wall)
- 124:: mounting portion (outer wall)
- 141:: outer edge of housing
- 142:: surface opposing to the lens in the housing
- 143:: bulb placement portion
- 160:: cover
- 161:: outer edge of cover
- 180:: leg
- 250:: bulb (light source)
- 251:: socket
- 400:: vehicle body cover
- 411:: tandem footrest
- 412:: grab bar
- 420:: seat
- 421:: side cover
- 421a:: outermost position of the side cover along the widthwise direction
- 430:: muffler
- 501:: rear wheel
- 502:: mudguard component
- 503:: base end
- 1000:: straddle type vehicle
- a:: opaque area
- F1:: surface on which the edge of the cover is mated with the edge of the lens (rear side)
- F2:: surface on which the edge of the cover is mated with the edge of the lens (front side)
- L1, L2:: lines connecting between the ends of the tandem footrest and the grab bar, the ends being the outermost ends along the widthwise direction of the vehicle
- s:: direction in which the leg extends
- t:: front end of flasher
- u:: rear end of flasher

## Claims

1. A flasher (101) to be mounted on a rear portion of a straddle type vehicle (1000), the flasher (101) comprising:
a lens (120);
a cover (160) to be mated with the lens (120); and
a leg (180) for coupling the cover (160) with a vehicle body,
**characterized in that** a surface (F1) on which the cover (160) is mated with the lens (120) is slanted in relation to the direction (S) in which the leg (180) extends, and
the dimension of the lens (120) along a vehicle widthwise direction is smaller than that along a vehicle lengthwise direction.

2. The flasher (101) according to Claim 1, wherein a surface (F1) on which the cover (160) is mated with an edge of the lens (120) is along a side of the vehicle body.

3. The flasher (101) according to Claim 1 or Claim 2, wherein the surface on which the cover (160) is mated with the edge of the lens (120) includes two surfaces (F1, F2) formed at a rear side and a front side, and the surface (F2) at the front side is more oriented toward a rear of a vehicle.

4. The flasher (101) according to any one of the preceding Claims, configured to locate a more frontal portion of the lens (120) further outwardly in the widthwise direction of a straddle type vehicle (1000) with respect to a more rearward portion.

5. The straddle type vehicle (1000) having the flasher (101) according to any one of preceding Claims.

6. The straddle type vehicle (1000) according to Claim 5, wherein the straddle type vehicle has a tandem footrest (411) and a grab bar (412), and
when viewed from the rear of the vehicle, the flasher (101) is disposed inward of a line (L1, L2) connecting ends of the tandem footrest (411) and the grab bar (412), the ends being outermost ends along the widthwise direction of the vehicle.

7. The straddle type vehicle (1000) according to Claim 5 or Claim 6, wherein the straddle type vehicle has a side cover (421) disposed under a seat (420), and
the flasher (101) is disposed inward of an outermost position (421a) on the side cover (421) along the widthwise direction of the vehicle.

8. The straddle type vehicle (1000) according to any one of Claims 5 to 7, wherein the straddle type vehicle has a muffler (430) disposed along the side of the vehicle body, and
the flasher (101) is disposed inward of an outermost end of the muffler (430) along the widthwise direction of the vehicle.

9. The straddle type vehicle (1000) according to any one of Claims 5 to 8, wherein the straddle type vehicle has a tail lamp (103) provided at a rear portion of the vehicle body, and
the lens (120) of the flasher (101) is disposed outward of the outermost end of the tail lamp (103) along the widthwise direction of the vehicle.

10. The straddle type vehicle (1000) according to any one of Claims 5 to 9, wherein a surface on the vehicle body on which the leg (180) of the flasher (101) is mounted is oriented toward the rear of the vehicle.

11. The straddle type vehicle (1000) according to any one of Claims 5 to 10, wherein the flasher (101) is tapered toward a front end (t) and a rear end (u) thereof along the lengthwise direction.

12. The straddle type vehicle (1000) according to any one of Claims 5 to 11, wherein the rear end (u) of the flasher (101) is more acute-angled than the front end (t) of the flasher (101).

13. The straddle type vehicle (1000) according to any one of Claims 5 to 12, wherein the straddle type vehicle has the tail lamp (103) provided at the rear portion thereof,
the tail lamp (103) has a side portion (103b, 103c) extending forward along the side of the vehicle, and
the lens (120) of the flasher (101) extends at the side of the vehicle along the side portion (103b, 103c) of the tail lamp (103).

14. The straddle type vehicle (1000) according to any one of Claims 5 to 13, wherein a more frontal portion of the straddle type vehicle includes the lens (120) located further outwardly in the widthwise direction.

## Patentansprüche

1. Blinker (101), der an einem hinteren Abschnitt eines Grätschsitz-Fahrzeugs (1000) montierbar ist, wobei der Blinker (101) umfasst:
ein Lampenglas (120),
eine Abdeckung (160), die mit dem Lampenglas (120) verbindbar ist, und
einen Schenkel (180) zum Verbinden der Abdeckung (160) mit einem Fahrzeugaufbau, **dadurch gekennzeichnet, dass**
eine Fläche (F1), auf der die Abdeckung (160) mit dem Lampenglas (120) verbunden ist, in Bezug auf die Richtung (S), in die sich der Schenkel (180) erstreckt, geneigt ist, und
die Ausdehnung des Lampenglases in Richtung der Fahrzeugbreite kleiner als die in Richtung der Fahrzeuglänge ist.

2. Blinker(101) nach Anspruch 1, wobei sich eine Fläche (F1), auf der die Abdeckung (160) mit einer Kante des Lampenglases (120) verbunden ist, entlang einer Seite des Fahrzeugaufbaus befindet.

3. Blinker (101) nach Anspruch 1 oder 2, wobei die Fläche, auf der die Abdeckung (160) mit der Kante des Lampenglases (120) verbunden ist, zwei Flächen (F1, F2) umfasst, die an einer hinteren Seite und an einer vorderen Seite gebildet werden, und die Fläche (F2) an der vorderen Seite mehr in Richtung eines Hecks eines Fahrzeugs ausgerichtet ist.

4. Blinker (101) nach einem der vorhergehenden Ansprüche, der so gestaltet ist, um einen weiter vorn befindlichen Abschnitt des Lampenglases (120) weiter außen bezogen auf die Richtung der Breite eines Grätschsitz-Fahrzeugs (1000) im Hinblick auf einen weiter hinten befindlichen Abschnitt anzuordnen.

5. Grätschsitz-Fahrzeug (1000) mit dem Blinker (101) nach einem der vorhergehenden Ansprüche.

6. Grätschsitz-Fahrzeug (1000) nach Anspruch 5, wobei das Grätschsitz-Fahrzeug eine Tandem-Fußraste (411) und eine Griffstange (412) hat, und
von der Hinterseite des Fahrzeugs betrachtet, der Blinker (101) einwärts einer Linie (L1, L2) angeordnet ist, die die Enden der Tandem-Fußraste (411) und der Griffstange (412) miteinander verbindet, wobei es sich bei den Enden um die äußersten Enden in Richtung der Breite des Fahrzeugs handelt.

7. Grätschsitz-Fahrzeug (1000) nach Anspruch 5 oder 6, wobei das Grätschsitz-Fahrzeug eine Seitenabdeckung (421) hat, die unter einem Sitz (420) angeordnet ist, und
der Blinker (101) einwärts einer äußersten Stelle (421a) an der Seitenabdeckung (421) in Richtung der Breite des Fahrzeugs angeordnet ist.

8. Grätschsitz-Fahrzeug (1000) nach einem der Ansprüche 5 bis 7, wobei das Grätschsitz-Fahrzeug einen Schalldämpfer (430) hat, der entlang der Seite des Fahrzeugaufbaus angeordnet ist, und
der Blinker (101) einwärts eines äußersten Endes des Schalldämpfers (430) in Richtung der Breite des Fahrzeugs angeordnet ist.

9. Grätschsitz-Fahrzeug (1000) nach einem der Ansprüche 5 bis 8, wobei das Grätschsitz-Fahrzeug eine Rückleuchte (103) hat, die an einem hinteren Abschnitt des Fahrzeugaufbaus angeordnet ist, und
das Lampenglas (120) des Blinkers (101) außerhalb des äußersten Endes der Rückleuchte (103) in Richtung der Breite des Fahrzeugs angeordnet ist.

10. Grätschsitz-Fahrzeug (1000) nach einem der Ansprüche 5 bis 9, wobei eine Fläche an dem Fahrzeugaufbau, an der der Schenkel (180) des Blinkers (101) montiert ist, in Richtung des Hecks des Fahrzeugs ausgerichtet ist.

11. Grätschsitz-Fahrzeug (1000) nach einem der Ansprüche 5 bis 10, wobei der Blinker (101) in Richtung eines vorderen Endes (t) und eines hinteren Endes (u) desselben in Längsrichtung verjüngt ist.

12. Grätschsitz-Fahrzeug (1000) nach einem der Ansprüche 5 bis 11, wobei das hintere Ende (u) des Blinkers (101) spitzwinkliger ist als das vordere Ende (t) des Blinkers (101).

13. Grätschsitz-Fahrzeug (1000) nach einem der Ansprüche 5 bis 12, wobei das Grätschsitz-Fahrzeug eine Rückleuchte (103) hat, die an dem hinteren Abschnitt desselben angeordnet ist, und
die Rückleuchte (103) einen Seitenabschnitt (103b, 103c) umfasst, der sich nach vorne entlang der Seite des Fahrzeugs erstreckt, und
sich das Lampenglas (120) des Blinkers (101) an der Seite des Fahrzeugs entlang des Seitenabschnitts (103b, 103c) der Rückleuchte (103) erstreckt.

14. Grätschsitz-Fahrzeug (1000) nach einem der Ansprüche 5 bis 13, wobei ein weiter vorn befindlicher Abschnitt des Grätschsitz-Fahrzeugs das Lampenglas (120) umfasst, das weiter außen in Richtung der Breite angeordnet ist.

## Revendications

1. Clignotant (101) à monter sur une portion arrière d'un véhicule du type à selle (1000), le clignotant (101) comprenant :
une lentille (120) ;
un couvercle (160) devant être apparié à la lentille (120) ; et
un pied (180) pour coupler le couvercle (160) au corps du véhicule,
**caractérisé en ce qu'**une surface (F1) sur laquelle le couvercle (160) est apparié à la lentille (120) est inclinée par rapport à la direction (S) dans laquelle le pied (180) s'étend, et
la dimension de la lentille (120) le long d'une direction transversale du véhicule est inférieure à la dimension le long d'une direction longitudinale du véhicule.

2. Clignotant (101) selon la revendication 1, dans lequel une surface (F1) sur laquelle le couvercle (160) est apparié à un bord de la lentille (120) se trouve le long d'un côté du corps du véhicule.

3. Clignotant (101) selon la revendication 1 ou la revendication 2, dans lequel la surface sur laquelle le couvercle (160) est apparié au bord de la lentille (120) comprend deux surfaces (F1, F2) formées sur un côté arrière et un côté avant, et la surface (F2) sur le côté avant est orientée davantage vers un arrière d'un véhicule.

4. Clignotant (101) selon l'une quelconque des revendications précédentes, configuré pour placer une portion plus à l'avant de la lentille (120) plus à l'extérieur dans la direction transversale d'un véhicule du type à selle (1000) par rapport à une portion plus à l'arrière.

5. Véhicule du type à selle (1000) ayant le clignotant (101) selon l'une quelconque des revendications précédentes.

6. Véhicule du type à selle (1000) selon la revendication 5, dans lequel le véhicule du type à selle a un repose-pieds tandem (411) et une barre d'appui (412), et
vu depuis l'arrière du véhicule, le clignotant (101) est disposé à l'intérieur d'une ligne (L1, L2) reliant des extrémités du repose-pieds tandem (411) et de la barre d'appui (412), les extrémités étant des extrémités complètement à l'extérieur le long de la direction transversale du véhicule.

7. Véhicule du type à selle (1000) selon la revendication 5 ou la revendication 6, dans lequel le véhicule du type à selle a un couvercle latéral (421) disposé sous un siège (420), et
le clignotant (101) est disposé à l'intérieur d'une position complètement à l'extérieur (421a) sur le couvercle latéral (421) le long de la direction transversale du véhicule.

8. Véhicule du type à selle (1000) selon l'une quelconque des revendications 5 à 7, dans lequel le véhicule du type à selle a un pot d'échappement (430) placé le long du côté du corps du véhicule, et
le clignotant (101) est disposé à l'intérieur d'une extrémité complètement à l'extérieur du pot d'échappement (430) le long de la direction transversale du véhicule.

9. Véhicule du type à selle (1000) selon l'une quelconque des revendications 5 à 8, dans lequel le véhicule du type à selle a un feu arrière (103) placé dans une portion arrière du corps du véhicule, et
la lentille (120) du clignotant (101) est disposée à l'extérieur de l'extrémité complètement à l'extérieur du feu arrière (103) le long de la direction transversale du véhicule.

10. Véhicule du type à selle (1000) selon l'une quelconque des revendications 5 à 9, dans lequel une surface sur le corps du véhicule, sur laquelle le pied (180) du clignotant (101) est monté, est orientée vers l'arrière du véhicule.

11. Véhicule du type à selle (1000) selon l'une quelconque des revendications 5 à 10, dans lequel le clignotant (101) est effilé en direction de son extrémité avant (t) et de son extrémité arrière (u) le long de la direction longitudinale.

12. Véhicule du type à selle (1000) selon l'une quelconque des revendications 5 à 11, dans lequel l'extrémité arrière (u) du clignotant (101) forme un angle plus aigu que l'extrémité avant (t) du clignotant (101).

13. Véhicule du type à selle (1000) selon l'une quelconque des revendications 5 à 12, dans lequel le feu arrière (103) est placé dans la portion arrière du véhicule du type à selle,
le feu arrière (103) a une portion latérale (103b, 103c) s'étendant vers l'avant le long du côté du véhicule, et
la lentille (120) du clignotant (101) s'étend sur le côté du véhicule le long de la portion latérale (103b, 103c) du feu arrière (103).

14. Véhicule du type à selle (1000) selon l'une quelconque des revendications 5 à 13, dans lequel une portion plus avant du véhicule du type à selle comprend la lentille (120) placée plus à l'extérieur dans la direction transversale.
